# EUROPEAN PATENT APPLICATION

(11) **EP 4 527 481 A1**
(43) Date of publication of application: **26.03.2025**
(21) Application number: 24202063.4
(22) Date of filing: 23.09.2024
(51) Int. Cl.: B01D 25/164, B01D 25/38

(54) **PLATE DETECTION APPARATUS FOR FILTER PRESSES**

(30) Priority: 25.09.2023 GB 202314653
(71) Applicant: Terex GB Limited, Dungannon County Tyrone BT71 4DR (GB)
(72) Inventor: McFARLANE, Johnston, Dungannon, BT71 4DR (GB); McMENAMIN, Barry, Castlederg, BT81 7XF (GB)
(74) Representative: FRKelly

(57) **Abstract**

A plate detection apparatus for a filter press comprises a base, a detection device having sensors configured to detect adjacent open plates of the filter press when open. The detection device is coupled to the base, is movable with respect to the base into and out of an extended state, and is resiliently biased to adopt the extended state. The detection device engages with the plates under resilient bias, which steadies the plates as well as enabling the detection device to accommodate variations in the plates, all of which facilitates their detection by the detection device.

## Description

### FIELD OF THE INVENTION

This invention relates to plate detection apparatus for filter presses.

### BACKGROUND TO THE INVENTION

A filter press is used to separate liquid from solids using a pressurised filtration process. The filter press comprises parallel plates including filtration cloths. In use, for example when washing aggregate material, sludge or slurry is pumped into chambers formed by the plates when closed. Under pressure the liquid, primarily water, passes through the filtration cloths for collection, leaving cakes of solid material between the plates. The plates can then be opened to allow the cakes to be removed. However, the slurry often contains sticky clays or the like which can stick to the filtration cloths, and over time reduce the efficiency of the filter press, e.g. by blocking off exit routes for the filtered water. In addition, the build-up of clays on the cloths results in a poorer clamping force, which can cause mud blowing out the sides of the clamped plates, and unequal force distribution, causing premature stress in the filter press.

To mitigate the above problems, a washing apparatus may be provided to clean the plates. The washing system travels along the top of the filter press, and drops down between opened plates and sprays a high pressure jet of water onto the plate cloths to clear the built up clays and the like. This washing apparatus relies on proximity sensors to locate itself: when two sensors each pick up a plate, the apparatus knows it is in position between the two plates and can commence the washing process.

However, conventional sensor arrangements for the washing apparatus tend to be unreliable in that they can fail to detect plates with the result that some plates are not washed. The failure to detect plates can be for a number of reasons, including movement of the plates during the sensing process, sagging of the beam that supports the plates, manufacturing inconsistencies and build-up of dirt on the beam, which can alter the height of the plates.

It would be desirable to mitigate the problems outlined above.

### SUMMARY OF THE INVENTION

From a first aspect the invention provides a plate detection apparatus for a filter press, the filter press comprising a row of plates wherein adjacent plates are movable with respect to each other between an open state and a closed state, the plate detection apparatus comprising:
a base;
a detection device comprising at least one sensor configured to detect a first plate and an adjacent second plate when in the open state, wherein the detection device is coupled to the base and is movable with respect to the base into and out of an extended state, and wherein the detection device is resiliently biased to adopt the extended state.

Typically, the detection device is movable away from the base into the extended state, and towards the base out of the extended state. Advantageously, the detection device is pivotable with respect to the base, preferably such that each end of the detection device is independently movable toward or away from the base.

In preferred embodiments, the detection device is coupled to the base by at least one resiliently biased suspension device configured to hold the detection device in the extended state and to allow movement of the detection device towards the base against the resilient bias. Said at least one resiliently biased suspension device preferably comprises first and second spaced apart resiliently biased suspension devices that are preferably operable independently of each other. Said first and second suspension devices may be spaced apart in a first direction, said first direction being parallel, or substantially parallel, in use, with a longitudinal axis of said row of plates. The, or each, resiliently biased suspension device may comprise at least one spring, preferably at least one compression spring.

In preferred embodiments, the detection device is coupled to the base by at least one bar, said at least one bar being fixed with respect to one of the detection device and the base, and movable with respect to the other of the detection device and the base, and wherein said one of the detection device and the base is preferably the detection device. Said at least one bar may extend through a corresponding aperture provided in said other of the detection device and the base, and is movable with respect to said other of the detection device and the base via said aperture. Said at least one bar preferably carries a stop member that is dimensioned not to pass through said aperture in order to maintain a coupling between said at least one bar and said other of the detection device and the base. The stop member may be movable along the respective bar in order to adjust the distance between the detection device and base in the extended state. Conveniently, the stop member is a threaded nut provided on a correspondingly threaded part of the respective bar. Said at least one bar preferably comprises first and second bars spaced apart in a first direction, said first direction preferably being parallel, or substantially parallel, in use, with a longitudinal axis of said row of plates.

In preferred embodiments, the or each bar is part of a respective suspension device, and wherein, preferably, at least one spring is provided around the bar for providing the resilient bias.

In preferred embodiments, the detection device includes at least one engagement surface that is configured for engagement with at least one of said plates, preferably with at least two of said plates simultaneously. Said engagement surface preferably comprises a first portion configured for simultaneously engaging with said first and second plates in the open state, preferably at least when said first and second plates are detected by said at least one sensor. Said first portion is preferably flat, or substantially flat. Said first portion is typically a bottom surface of the detection device. Preferably, said engagement surface includes a ramp portion located at at least one end of the detection device, and preferably includes a respective ramp portion at each end of the detection device, said ramp portion preferably being flat or substantially flat, and wherein the ramp portion is preferably contiguous with said first portion of the engagement surface. Preferably the, or each, ramp portion is configured such that the respective end of the detection device tapers in a direction away from said base.

In preferred embodiments, said at least one sensor comprises a first sensor and a second sensor, said first and second sensors being configured to detect a respective one of said first and second plates when in the open state, and wherein, preferably, said first and second sensors are spaced apart in a first direction, said first direction preferably being parallel, or substantially parallel, in use, with a longitudinal axis of said row of plates. Said at least one sensor preferably includes a third sensor located between said first and second sensors, said third sensor being configured to detect a gap between said first and second plates.

In preferred embodiments, said at least one sensor is level, or substantially level, with the first portion of the engagement surface, or is recessed with respect to the first portion of the engagement surface. Preferably, said at least one sensor is exposed by said first portion of the engagement surface.

In typical embodiments, the detection apparatus is coupled to a washing apparatus of said filter press for movement with said washing apparatus in a first direction that is parallel or substantially parallel with a longitudinal axis of said row of plates. The resilient bias applied to the detection device is preferably configured to urge said detection device into engagement with a respective part of said first and second plates. The detection apparatus is preferably configured such that, when said first and second plates are detected by said detection device, said first portion of the engagement surface is in resiliently biased engagement with a respective part of the first and second plates simultaneously.

In preferred embodiments, the plate detection apparatus is arranged to detect a respective part of said plates from above, and wherein the plate detection apparatus is configured such that, upon movement of the plate detection apparatus in said first direction towards the respective part of a plate, the detection device engages with the respective part and is pushed upwards against the resilient bias applied to the detection device. The preferred arrangement is such that, upon movement of the plate detection apparatus in said first direction towards the respective part of a plate, the ramp portion at one end of the detection device engages with the respective part to cause the detection device to be pushed upwards against the resilient bias. The plate detection apparatus is preferably arranged to detect, or at least engage with, a surface of a respective part of said first and second plates from above, and wherein the plate detection apparatus is configured such that, in the extended state, at least part of the detection device is below the respective surface.

In typical embodiments, the plate detection apparatus is configured to detect a respective part of said first and second plates that projects laterally from said row.

Typically, the plate detection apparatus includes, or is in communication with, a controller, the controller being configured to control the operation of the washing apparatus depending on detection of correct alignment using the plate detection apparatus. The controller may be configured to determine from detection apparatus when correct alignment with an instance of adjacent open plates is achieved, and to consequently cause the washing apparatus to deploy a washing device, and preferably also to, when washing is complete, cause the washing apparatus to move along the row of plates until correct alignment with another instance of adjacent open plates is detected.

From another aspect the invention provides a filter press comprising a row of plates wherein adjacent plates are movable with respect to each other between an open state and a closed state, the filter pressing including a plate detection apparatus according to the first aspect of the invention.

In typical embodiments, the washing apparatus is movable with respect to said row in said first direction and is alignable with successive instances of said first and second plates as it moves along the row, and wherein said washing apparatus is aligned with a respective instance of first and second plates by detection of said first and second plates in the open state by said plate detection apparatus. The washing apparatus typically includes a washing device that is deployable to wash said first and second plates when in the open state, and wherein, upon alignment of said washing apparatus with an instance of said first and second plates in the open state, said washing apparatus is operated to deploy the washing device, typically by inserting the washing device between the first and second plates.

In preferred embodiments, the detecting apparatus prevents the plates from swaying, thereby facilitating detection of the plates to ensure that the washing apparatus is deployed into the gap between the plates.

In preferred embodiments, the arrangement allows the sensors to be self-aligning when detecting plates to be washed.

In preferred embodiments, the detecting apparatus is self-aligning with respect to adjacent plates. The preferred detecting apparatus has a body, which may for example be formed from polypropylene, in which the sensors are provided, the body being resiliently biased in a direction towards the filter plates. In use, as the body travels along the plates it self-adjusts to keep the sensors in detecting range of the plates.

In preferred embodiments, the body has a flat surface for engaging with the plates, or more particularly a laterally projecting part of each plate. The flat surface engages with the top of the plate part and presses down, by means of said resilient biasing, to stop the movement of the plate, in particular swaying movement. The preferred body is also shaped to move along and up over the plates to exert a downward force, preferably by having of tapered leading end(s). The tapered leading end(s) facilitate travel of the body up and over the plates as it passes across them. The preferred body houses sensors for detecting plates. Advantageously, the detecting apparatus can be retrofitted to filter presses.

Further advantageous aspects of the invention will be apparent to a skilled person upon the following review of a specific embodiment and with reference to the accompanying drawings.

### BRIEF DESCRIPTION OF THE DRAWINGS

An embodiment of the invention is now described by way of example and with reference to the accompanying drawings in which:
Figure 1 is a perspective view of a filter press suitable for use with plate detection apparatus embodying one aspect of the invention;
Figure 2A is a perspective view of some of the plates of the filter press of Figure 1;
Figure 2B is an enlarged view of a plate mounting arrangement shown in Figure 2A;
Figure 3 is a perspective view of a preferred plate detecting apparatus embodying one aspect of the invention;
Figure 4 is a front view of the plate detecting apparatus of Figure 3;
Figure 5 is a side view of the plate detecting apparatus of Figure 3;
Figure 6 is a perspective view of a plate detecting device, being part of the plate detecting apparatus of Figure 3;
Figure 7 is a side view of the plate detecting device of Figure 6;
Figure 8 is a side view of the plate detecting device of Figure 6;
Figure 9 is a bottom view of the plate detecting device of Figure 6;
Figure 10A is a side view of part of the filter press of Figure 1 including the plate detection apparatus of Figure 3; and
Figure 10B is an enlarged view of the plate detection apparatus as shown in Figure 10A.

### DETAILED DESCRIPTION OF THE DRAWINGS

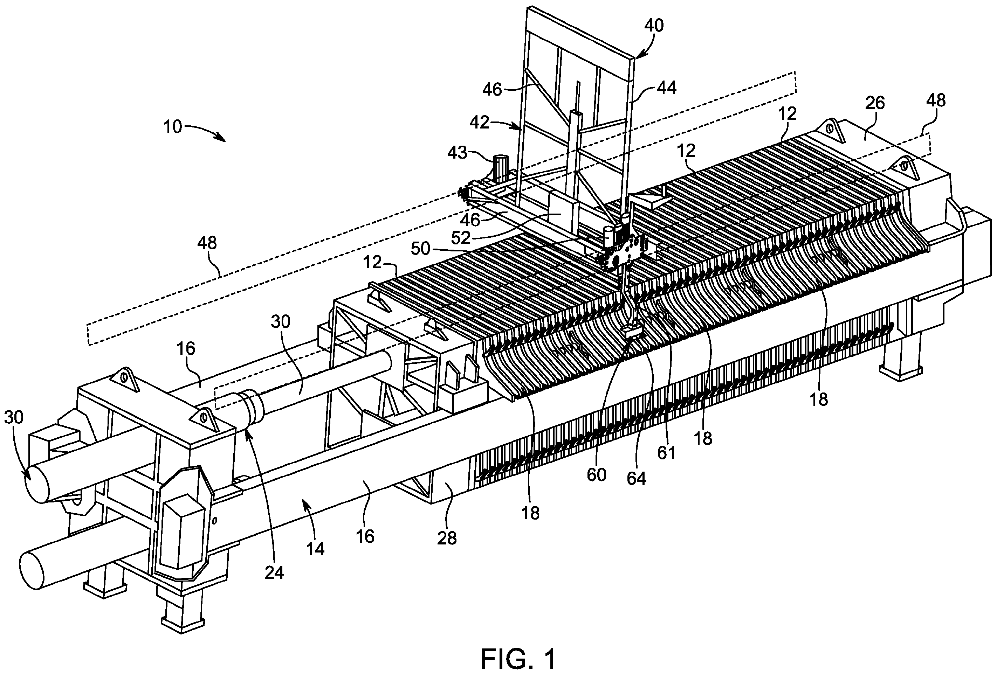

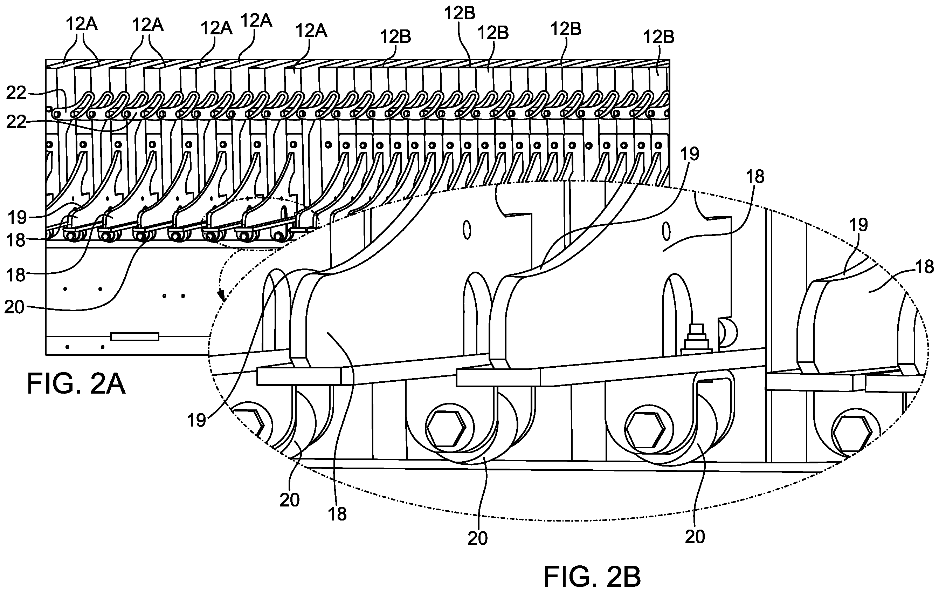

Referring in particular to Figures 1 and 2, there is shown, generally indicated as 10, a filter press suitable for use with embodiments of the invention. The filter press may be of any conventional type, and only those components that are helpful for providing an understanding of the invention are shown. The filter press 10 comprises a plurality of plates 12 supported by a support structure 14. The plates 12 are arranged in a row, typically along a common central axis that runs perpendicular to the plates 12 or otherwise in a face-to-face arrangement. The plates 12 are disposed parallelly, or substantially parallelly, with each other. The plates 12 are typically vertically, or substantially vertically disposed, at least in use. In typical embodiments the plates 12 are generally rectangular in shape but may alternatively take other shapes. The plates 12 are movable with respect to each other between an open state, in which a gap is provided between adjacent plates 12, and a closed state in which adjacent plates 12 abut or engage with each other. By way of example, in Figure 2A plates 12A are shown in the open state while plates 12B are shown in the closed state. In the closed state, a chamber (not visible) for receiving slurry (or other mixture of liquid and solid material that requires separation) is defined between adjacent plates 12A. The plates 12 include one or more filtration layer (not shown), for example comprising filtration cloth, filtration membrane and/or other filtration media for separating the liquid from the solid material. The plates 12 may be referred to as filter plates 12. The specific configuration of the plates 12 may vary from embodiment to embodiment (e.g. depending on the type of filter press), and each plate 12 may for example comprise an assembly of components, e.g. an assembly of one or more filter component with one or more frame component(s) and/or plate component(s). For example, in typical embodiments, each plate 12 comprises a plate (which may for example be made from polypropylene) covered with a filter cloth. Typically, the plates 12 have one or more through-aperture to allow slurry or the like to be pumped through the plates 12 from one end of the row of plates to the other end of the row.

In typical embodiments, the support structure 14 comprises first and second parallel beams 16, which are typically horizontally disposed at least in use. The row of plates 12 is located between and supported by the beams 16. The arrangement is such that the beams 16 and the row of plates are parallel with each other, i.e. the axis along which the row of plates 12 extends is parallel with the longitudinal axis of the beams 16. Each plate 12 includes a respective support member 18 by which it is supported on the beams 16. Typically, the support member 18 comprises an arm, or other structure, that projects laterally from the main body of the plate 12, and which may be integrally formed with the plate 12, or fixed to the plate 12 in any conventional manner. A respective support member 18 is usually provided at each side of the plate 12, each support member 18 supporting the plate 12 on a respective one of the beams 16. The plates 12 are movable along the beams 16, in particular to allow the plates 12 to move towards and away from each other in order to move between the open and closed states. To facilitate movement along the beams 16, each support member 18 may be provided with a wheel 20, or other rolling element (e.g. bearing or roller), that engages with the respective beam 16.

Adjacent plates 12 may be interconnected by a linkage 22 that permits movement of the adjacent plates 12 towards and away from each other between the open and closed states, and which limits the spacing between the adjacent plates 12 when in the open state, thereby determining the width of the gap between adjacent plates 12 in the open state.

The filter press 10 includes a compression apparatus 24 for clamping or holding the plates 12 together in the closed state by applying force to the row of plates 12 along the axial direction of the row. The compression apparatus 24 may comprise a fixed head 26, a movable head 28 and actuating means 30 for moving the movable head 28 towards and away from the fixed head 26. The movable head 28 may be supported by, and movable along, the beams 16. The row of plates 12 is located between the fixed head 26 and the movable head 28. The actuating means 30 preferably comprises a powered actuator (e.g. comprising one or more hydraulic rams) but may alternatively comprise a manual actuator such as a jack.

The filter press 10 includes an inlet (not visible but typically provided in the fixed head 26) through which slurry or the like may be fed into the row of plates 12 when they are clamped together in the closed state by the compression apparatus 24. The slurry is typically pumped into the row of plates 12 by a pump (not shown) until the cavities between adjacent plates 12 are filled with the slurry. Pressure within the row of plates 12 causes the liquid to be separated from the solid material by the filtration media. The separated liquid may be drained and collected in any convenient manner. The dewatered solid material remains in the cavities between adjacent plates 12, typically in the form of cakes (sometimes referred to as filter cakes). When the pressurised filtration process is finished, the plates 12 may be moved to the open state to allow the cakes to be removed (for example they may fall under gravity and be collected in a receptacle (not shown) located below the row of plates 12). Movement of the plates 12 between the open and closed states is conveniently effected by the compression apparatus 24. For example, prior to the slurry being fed into the row of plates 12, the movable head 28 may be moved towards the fixed head 26 thereby pushing the plates 12 together into the closed state. Subsequently, the movable head 28 may be moved away from the fixed head 26 thereby pulling the plates 12 apart and into the open state. To this end, the movable and fixed heads 28, 26 may be coupled to the row of plates 12 by any convenient means.

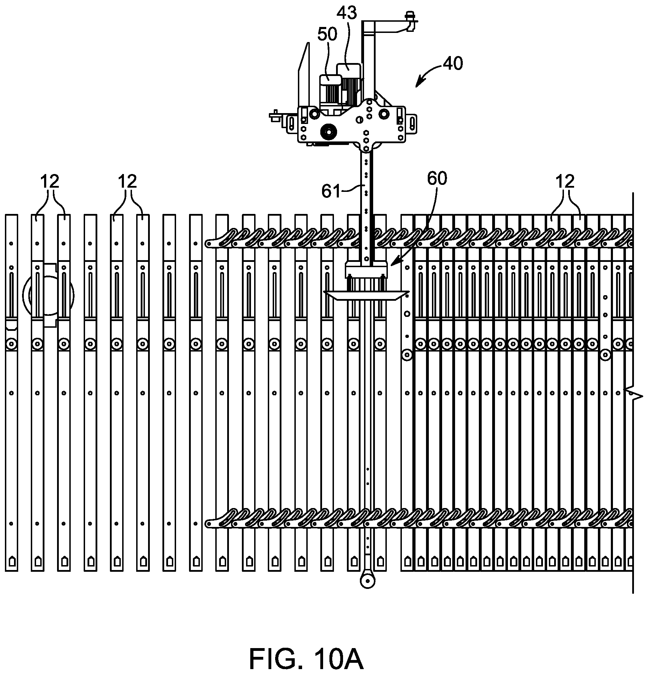

A washing apparatus 40 is provided for washing the plates 12, in particular after the cakes are removed and while the plates 12 are in the open state. The washing apparatus 40 may take any suitable form and may be of generally conventional design. Typically, the washing apparatus 40 includes a washing device 42 that is shaped and dimensioned to fit between adjacent plates 12 when in the open state. The washing device 42 typically includes a plurality of outlets, e.g. nozzles or spray heads, through which water or other liquid can be dispensed to wash the plates 12. In the illustrated embodiment, the washing device 42 comprises a frame 44 that includes structures 46 for carrying the outlets and supplying liquid to the outlets during use. The washing device 42 is movable between a non-washing state (as illustrated in Figure 1) in which it is clear of the plates 12 (typically being located above or otherwise adjacent the row of plates 12) and a washing state (as illustrated in Figure 10A) in which it is located between two adjacent plates 12 when in the open state.

The washing device 42 is carried by a support structure 46 and is movable with respect to the support structure 46 (typically up and down) between the washing and non-washing states. The washing device 42 may be coupled to the support structure 46 by any suitable coupling means in order to facilitate the movement between the washing and non-washing states. Drive means 43, e.g. comprising a motor and/or actuator, are typically provided for moving the washing device 42 between the washing and non-washing states, and may be mounted on the support structure 46 in any convenient manner.

The washing apparatus 40 is movable along the row of plates 12 so that the washing device 42 can be inserted between respective adjacent plates 12 in succession. To this end, the washing apparatus 40 may be coupled to rail(s) 48 (shown schematically in broken outline) that run parallel with the row of plates 12. In typical embodiments, the washing apparatus 40 is mounted on first and second parallel rails 48 that run parallel with the longitudinal axis of the row of plates 12, and parallel with the beams 16. The washing apparatus 40 may be coupled to the rails 48 in any conventional manner (e.g. via a track and roller arrangement) that enables movement along the rails 48. Drive means 50, e.g. comprising a motor and/or actuator, are typically provided for moving the washing apparatus 40 along the rails 48. Conveniently washing apparatus 40 is mounted on the rails 48 via the support structure 46, which may also carry the drive means 50.

Typically, the washing apparatus 40 is controlled by a controller 52. The controller 52 may comprise any suitably programmed computer, microcontroller or other control device, and may be provided at the washing apparatus 40 itself, or be remotely located.

A plate detection apparatus 60 is provided for locating the washing apparatus 40 with respect to the plates 12. In particular, the plate detection apparatus 60 is configured to detect two adjacent plates 12 when in the open state in order that the washing device 42 can be inserted between the two detected adjacent plates. The plate detection apparatus 60 is fixed with respect to the washing apparatus 40 the arrangement being such that when the plate detection apparatus 60 detects two adjacent plates 12 in the open state, the washing device 42 is aligned with the gap between the detected plates 12 so that it can be inserted between the detected plates 12. The plate detection apparatus 60 may be fixed to the washing apparatus 40 by any convenient means, for example by support arm 61 or other support structure. In use, the plate detection apparatus 60 moves with the washing apparatus 40 in a first direction A that is parallel or substantially parallel with the longitudinal axis the row of plates 12.

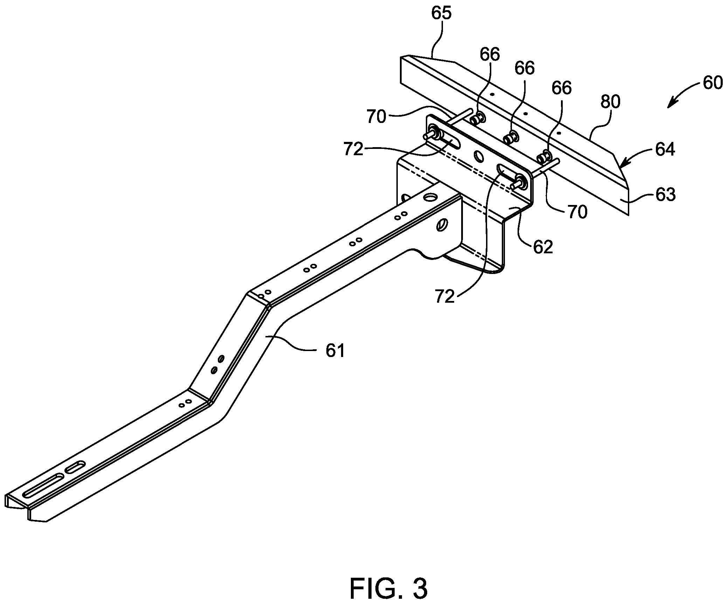

The plate detection apparatus 60 includes at least one sensor 66 (Figure 3) for detecting adjacent plates 12 when in the open state. Conveniently, the plate detection apparatus 60 is arranged to detect the adjacent plates 12 by detecting the respective support member 18, or other structure or part of the plate 12 that projects laterally from the main body of the plate 12. In typical embodiments, the plate detection apparatus 60 is arranged such that it detects a top, or upwardly facing, surface 19 of the support member 18 of the adjacent plates 12.

There are various factors that can make it difficult to reliably detect the plates 12, in particular the top surface 19 of the support member 18. Firstly, the plates 12 are able to sway or pivot about the mounting wheel 20 when in the open state, and the corresponding back and forth movement of the support member 18 can prevent it from being detected by the detection apparatus 60. As a result, the washing apparatus 40 is not activated and the swaying plate 12 (and the adjacent plate) are not washed. Other factors including sagging of the beams, inconsistencies in the manufacture of the support members 18 and build-up of dirt on the beams causing movement of the plates 12.

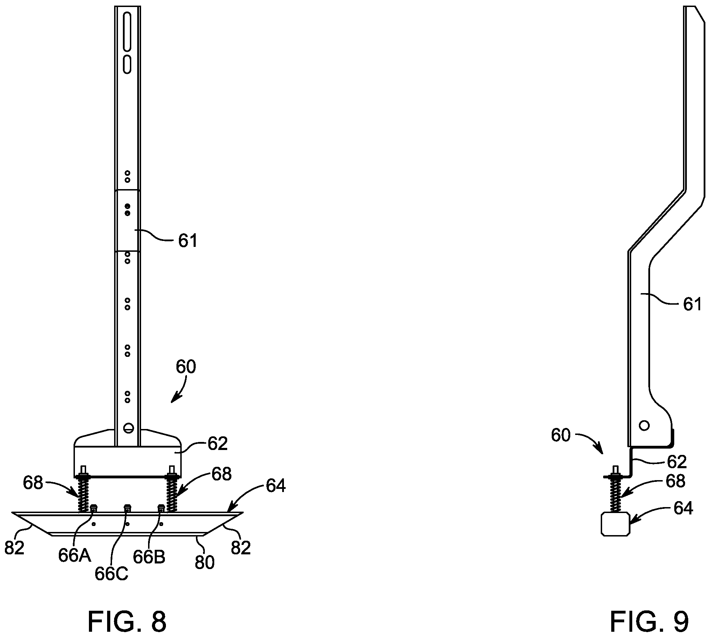

A preferred embodiment of the plate detection apparatus 60 is now described with reference in particular to Figures 3 to 9. The plate detection apparatus 60 comprises a base 62 and a detection device 64. The detection device 64 comprises at least one sensor 66 configured to detect adjacent plates 12 when in the open state. The detection device 64 is coupled to the base 62 and is movable with respect to the base 62 into and out of an extended state (as shown in Figure 3 for example). In particular, the preferred detection device 64 is movable away from the base 62 into the extended state, and towards the base 62 out of the extended state. The detection device 64 is resiliently biased to adopt the extended state. Preferably, the detection device 64 is pivotable with respect to the base 64, in particular such that each end 63, 65 of the detection device 64 is independently movable toward or away from the base 62.

The base 62 may take any suitable form, typically comprising a plate, a bracket or other support structure, and may be formed from any suitable material, e.g. metal or plastics.

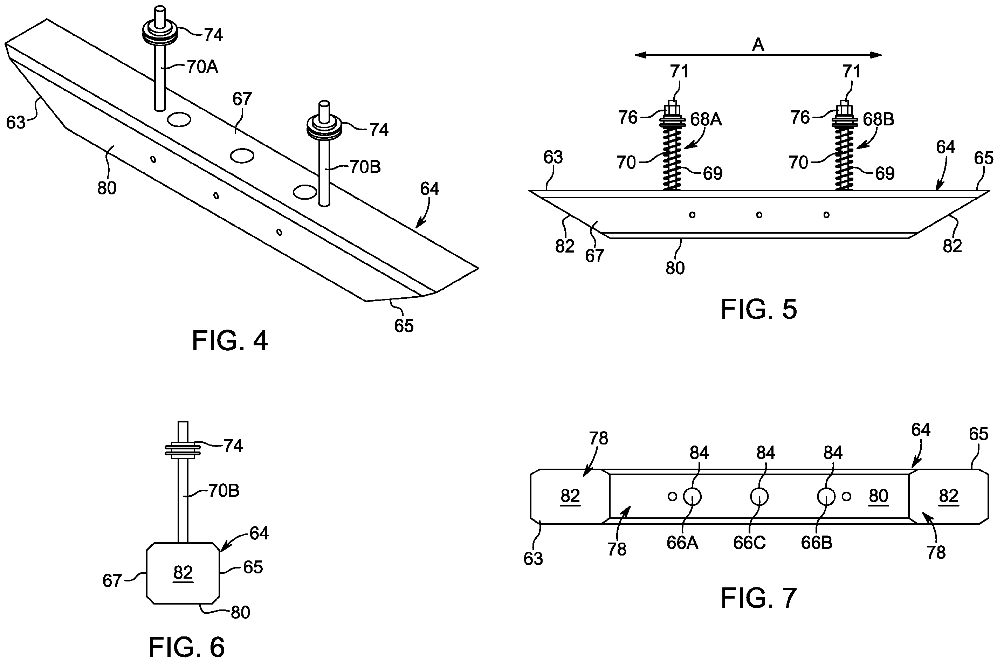

In preferred embodiments, the detection device 64 is coupled to the base 62 by at least one resiliently biased suspension device 68. The, or each, resiliently biased suspension device 68 is configured to hold the detection device 64 in the extended state and to allow movement of the detection device 64 towards the base 62 against the resilient bias. As such, the, or each, resiliently biased suspension device 64 provides the resilient bias that urges the detection device 64 towards the extended state. Preferred embodiments have first and second resiliently biased suspension devices 68A, 68B that are advantageously operable independently of each other, i.e. the detection device 64 is movable to compress one of the devices 68A, 68B without necessarily compressing the other, or at least not compressing the other by the same amount. This arrangement facilitates pivoting movement of the detection device 64 with respect to the base 62, in particular such that the ends 63, 65 are independently movable toward or away from the base 62. In preferred embodiments, the suspension devices 68 are spaced apart in a first direction (indicated by arrow A in Figure 5), which typically corresponds with the longitudinal axis of the detection device 64. In use, the preferred arrangement is such that the first direction A is parallel, or substantially parallel with the longitudinal axis of the row of plates 12. In alternative embodiments, there may be more than two suspension devices 68, or only one suspension device 68.

Typically, the, or each, suspension device 68 comprises a spring 69, preferably a compression spring, arranged to provide the resilient bias that urges the detection device 64 into the extended state. In particular, the spring 69 may extend between the base 62 and the detection device 64 such that it is compressed as the detection device 64 moves towards the base 63. Optionally, each suspension device 68 may have more than one spring 69. In other embodiments, alternative resilient biasing means may be provided for urging the detection device 64 into the extended state.

In preferred embodiments, the detection device 64 is coupled to the base 62 by at least one bar 70. Preferably, the, or each, bar 70, is fixed to the detection device 64 and is movable with respect to the base 62 to allow the detection device 64 to move towards and away from the base 62. Each bar 70 extends through a corresponding aperture 72 provided in the base 62, and is movable with respect to base 62 through the respective aperture 72. A grommet 74 may be provided to couple the bar 70 to the respective aperture 72. Optionally, each bar 70 carries a stop member 76 that is dimensioned not to pass through the aperture 72 in order to maintain a coupling between the bar 70 and the base 62, i.e. to prevent the free end 71 of the bar 70 from passing through the aperture 72.

Advantageously, the stop member 76 is movable along the bar 70 in order to adjust the distance between the detection device 64 and base 62 in the extended state. Conveniently, the stop member 76 is a threaded nut provided on a correspondingly threaded part of the bar 70. Preferred embodiments have first and second bars 70A, 70B, spaced apart in the first direction A. In alternative embodiments, there may be more than two bars 70, or only one bar 70. In alternative embodiments, the or each, bar 70 is fixed to the base 62 and is movable with respect to the detection device 64 to allow the detection device 64 to move towards and away from the base 62. Advantageously, the bar(s) 70 serve to guide the movement of the detection device 64 with respect to the base 62.

In preferred embodiments, each bar 70 is part of a respective suspension device 68. The spring 69 may be located around the bar 70 for providing the resilient bias that urges the detection device 64 away from the base 62 into the extended state. In particular, the spring 69 may extend between the base 62 and the detection device 64 such that it is compressed as the detection device 64 moves towards the base 62 and the bar 70 passes through the aperture 72. In alternative embodiments, the spring(s) 69 may be provided separately from the bar(s) 70. Alternatively still, the bars 70 may be omitted in which case the suspension device(s) 68 may comprise only the spring(s) 69. For example, in alternative embodiments, there may be a single suspension device 68, which comprises only a spring 69 and which is centrally located on the detection device 64. This alternative arrangement facilitates movement of the detection device 64 towards and away from the base 32 as well as the pivoting movement described above.

In preferred embodiments, the detection device 64 includes at least one engagement surface 78 for engaging with the plates 12. The preferred engagement surface 78 comprises a first portion 80 configured for simultaneously engaging with first and second adjacent plates 12 when in the open state. In particular, the first portion 80 of the engagement surface 78 is configured to be in engagement with both of the adjacent plates 12 when they are detected by the sensor(s) 66. Preferably, the first portion 80 is flat, or substantially flat. Preferably, the first portion 80 is a bottom surface of the detection device 64.

In preferred embodiments, the engagement surface 78 includes a ramp portion 82 located at at least one end of the detection device 64, and preferably includes a respective ramp portion 82 at each end of the detection device 64. Preferably, each ramp portion 82 is flat or substantially flat. The preferred configuration is such that the ramp portion 82 causes the respective end of the detection device 64 to taper in a direction away from the base 62, i.e. in a direction from the top of the detection device 64 to the bottom of the detection device 64. Each ramp portion 82 is preferably contiguous with the first portion 80 of the engagement surface 78.

In typical embodiments, the detection device 64 has a body 67, which may be solid or hollow, and which may be formed from any suitable material e.g. metal or plastics. The first portion 80 of the engagement surface 78 may be provided at the bottom of the body 67. The ramp portion(s) 82 may be provided at a respective end of the body 67, for example as chamfered ends. The preferred arrangement is such that the longitudinal axis of the body 67 corresponds to the longitudinal axis of the detection device 64, and is preferably aligned with the first direction A.

Preferred embodiments have first and second sensors 66A, 66B that are configured to detect a respective one of first and second adjacent plates 12 when in the open state. The first and second sensors 66A, 66B are spaced apart in the first direction A, in particular by a distance that corresponds to the distance between the adjacent plates 12 when in the open state. Preferably, a third sensor 66C is located between the first and second sensors 66A, 66B, the third sensor 66C being configured to detect a gap between the adjacent plates 12 in the open state.

The preferred arrangement is such that each sensor 66 (or at least the sensing part of the sensor) is level, or substantially level, with the first portion 80 of the engagement surface 78, or is recessed with respect to the first portion 80, or otherwise arranged such that the sensor 60 does not project out of the detection device 64 beyond the first portion 80 of the engagement surface 78. Typically, each sensor 66 (or at least its sensing part) is exposed at the first portion 80 of the engagement surface 78, for example by a respective aperture 84 provided in the surface portion 80. In preferred embodiments, each sensor 66 is at least partially housed in the body 67.

In use, each sensor 66 generates an output signal indicating detection of the respective part (i.e. the top surface 19 of the support member 18 in the illustrated example) of a plate 12. When both the first and second sensors 66A, 66B detect a plate 12 at the same time, it is assumed that the sensors 66A, 66B are aligned with the respective part of two adjacent plates 12 in the open state. It may therefore be determined (by controller 52 in this example) that the plate detection apparatus 60, and therefore the washing apparatus 40, is correctly aligned with the adjacent plates 12 and that the washing process may be performed. Advantageously, determination of correct alignment involves also determining that the third sensor 66 does not detect a plate 12 (or other potentially obstructing object) at the same time, i.e. that its output indicates that the third sensor 66C is aligned with a gap, i.e. the gap between the adjacent plates 12. In typical embodiments, the output of each sensor 66 is communicated to the controller 52 to enable the controller 52 to determine when correct alignment is achieved, and so to control the operation of the washing apparatus 40.

Each sensor 66 may be of any conventional type that is suitable for detecting the presence of the plates 12, and is preferably a non-contact sensors. In preferred embodiments, each sensor 66 is a proximity sensor. By way of example, each sensor 66 may be an inductive sensor, a capacitive sensor, an optical sensor, an infrared sensor, an ultrasonic sensor or an electromagnetic sensor.

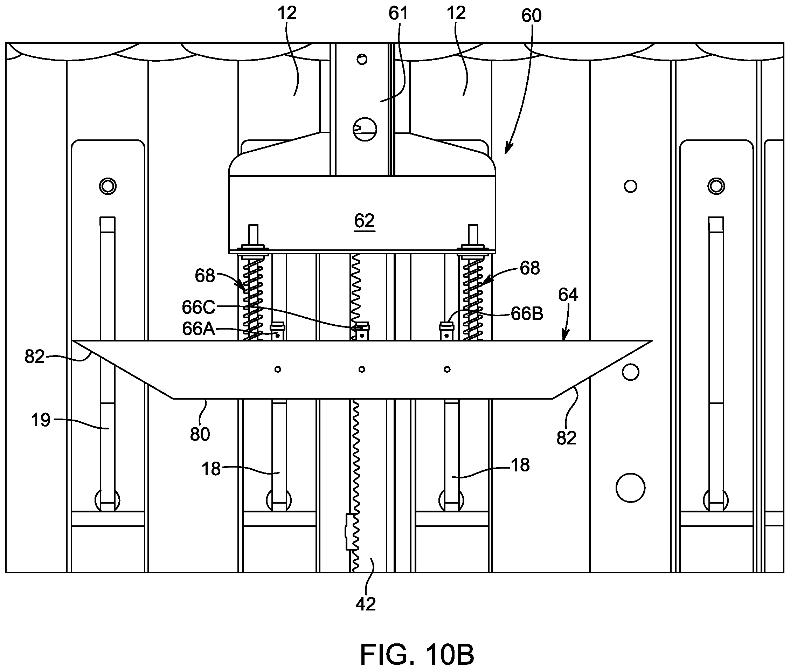

With reference in particular to Figures 10A and 10B, in use, the resilient bias applied to the detection device 64 urges the detection device 64 into engagement with the respective part (i.e. a top or upwardly facing surface 19 of the support member 18 in the illustrated example) of the adjacent plates 12 in the open state. The preferred arrangement is such that, when the adjacent plates 12 are detected by the detection device 64, the first portion 80 of the engagement surface 78 is resiliently biased into engagement with the respective part of each of the adjacent plates 12 simultaneously. The engagement of the detection device 64 with the plates 12 serves to steady the plates 12, for example stopping or reducing any swaying movement of the plates 12, which facilitates their detection by the detection device 64. In addition, the resiliently biased movement of which the detection device 64 is capable enables the detection device 64 to accommodate variations in the height of the respective part of the plate 12 to be detected. The preferred arrangements that enable pivoting movement of the detection device 64 allow the detection device 64 to accommodate situations in which the respective part of one of the adjacent plates 12 is at a different height than the respective part of the other adjacent plate 12. The preferred detection device 64 helps to ensure that the respective part of the plates 12 to be detected is within the field of detection of the sensors 66 when correct alignment with adjacent plates 12 is established so that the correct alignment can be detected.

In preferred embodiments, the plate detection apparatus 60 is arranged to detect the respective part (i.e. the top surface 19 of the support member 18 in the illustrated example) of the plates 12 from above. As such the detection device 64 is located above the part 19 and the sensors 66 are arranged such that their field of detection extends downwardly.

The direction A is an axial direction and in preferred embodiments the washing apparatus 40 and plate detection apparatus 60 can move in the direction A in either sense, i.e. left or right as view in Figures 10A and 10B. Typically, the washing apparatus 40 and detection apparatus 60 move in one direction, e.g. left to right as viewed in Figure 10A, in order to wash successive instances of adjacent plates 12. As the washing apparatus 40 moves along the row of plates 12, the detection apparatus 60 enables the washing apparatus 40 to align correctly with each instance of adjacent plates 12 by simultaneously detecting the respective plates 12 in the open state. Upon alignment of the washing apparatus 40 with an instance of adjacent plates 12 in the open state, the washing apparatus 40 is operated to insert the washing device 42 between the detected plates 12.

As the plate detection apparatus 60 moves along the row from one instance of adjacent plates 12 to the next, the resilient biasing of the detection device 64 serves to keep the detection device 64, and in particular its engagement surface 78, in engagement with the respective surface 19 of the plates 12, even if there are height differences of the respective surfaces 19 from plate to plate. The preferred pivoting capability of the detection device 64 also helps to maintain engagement between the respective surfaces 78, 19. In preferred embodiments, the pate detection apparatus 60 is configured such that, in the extended state, at least part of the engagement surface 78 is lower than the surface 19 that the detection device 64 is intended to engage with to ensure that the resilient bias maintains the engagement between the surfaces 78, 19. For example, it is preferred that the detection apparatus 60 is dimensioned such that first portion 80 and at least part of the ramp portion(s) 82 are (or would be) below the surface 19 of the structures 18 when in the extended state.

Advantageously, the plate detection apparatus 60 is configured such that, upon movement of the plate detection apparatus 60 towards the respective part of a plate 12 (e.g. the support arm 18 in the illustrated example), the detection device 64 may engage with the respective part 18 (for example if the respective parts 18 of adjacent plates 12 are at different heights, or if there is a relatively large gap between adjacent plates 12 that allows the leading end of the detection device 64, or the whole detection device 64 to move downwards below the level of the surface 19 to be detected) and be pushed upwards against the resilient bias of the suspension devices 68. The upward movement is facilitated by the ramp portion 82 provided at the leading end of the detection device 64 that engages with the part 18 of the plate 12, i.e. the arrangement is such that the ramp portion engages with the part 18 of the plate 12 (in particular an edge of the surface 19) and subsequent movement of the detection device 64 towards the plate 12 causes the detection device 64 to be pushed upwards by the engagement of the ramp portion 82 with the plate part 18. The upward movement of the detection device 62 is also facilitated by the preferred pivoting movement of the detection device 64 that allows the end that engages with the part 18 to move upwards without the whole detection device 64 having to move upwards at the same time.

Further movement of the detection device 64 in the same direction brings the first portion 80 of the engagement surface 78 into engagement with the part 18, which is facilitated in preferred embodiments by the contiguity of the ramp portion 82 and the first portion 80.

Operation of the washing apparatus 40 may be controlled by the controller 52 depending on the detection of correct alignment using the plate detection apparatus 60. For example, the controller 52 may determine from the sensor outputs of the detection apparatus 60 when correct alignment with adjacent open plates 12 is achieved, and to consequently cause the washing apparatus 40 to deploy the washing device 42 between the plates 12. When the washing cycle is complete, the controller 52 may cause the washing apparatus 40 to retract the washing device 42 and then to move along the row of plates 12 until correct alignment with the next instance of adjacent open plates 12 is detected and the process repeats. The controller 52 may control the operation of the washing apparatus 40 by sending appropriate control signals to the respective drive means 43, 50 and/or other components as required.

The invention is not limited to the embodiment(s) described herein but can be amended or modified without departing from the scope of the present invention.

## Claims

1. A plate detection apparatus for a filter press, the filter press comprising a row of plates wherein adjacent plates are movable with respect to each other between an open state and a closed state, the plate detection apparatus comprising:
a base;
a detection device comprising at least one sensor configured to detect a first plate and an adjacent second plate when in the open state,
wherein the detection device is coupled to the base and is movable with respect to the base into and out of an extended state, and wherein the detection device is resiliently biased to adopt the extended state.

2. The apparatus of claim 1, wherein the detection device is movable away from the base into the extended state, and towards the base out of the extended state.

3. The apparatus of claim 1 or 2, wherein the detection device is pivotable with respect to the base, preferably such that each end of the detection device is independently movable toward or away from the base.

4. The apparatus of any preceding, wherein the detection device is coupled to the base by at least one resiliently biased suspension device configured to hold the detection device in the extended state and to allow movement of the detection device towards the base against the resilient bias, wherein the, or each, resiliently biased suspension device preferably comprises at least one spring, preferably at least one compression spring, and wherein, preferably, said at least one resiliently biased suspension device comprises first and second spaced apart resiliently biased suspension devices that are preferably operable independently of each other, and wherein, preferably, said first and second suspension devices are spaced apart in a first direction, said first direction being parallel, or substantially parallel, in use, with a longitudinal axis of said row of plates.

5. The apparatus of any preceding claim, wherein the detection device is coupled to the base by at least one bar, said at least one bar being fixed with respect to one of the detection device and the base, and movable with respect to the other of the detection device and the base, and wherein said one of the detection device and the base is preferably the detection device, and wherein, preferably, said at least one bar extends through a corresponding aperture provided in said other of the detection device and the base, and is movable with respect to said other of the detection device and the base via said aperture, and wherein, preferably, said at least one bar carries a stop member that is dimensioned not to pass through said aperture in order to maintain a coupling between said at least one bar and said other of the detection device and the base, said stop member typically being movable along the respective bar in order to adjust the distance between the detection device and base in the extended state, and wherein said stop member may be a threaded nut provided on a correspondingly threaded part of the respective bar, and wherein, preferably, wherein said at least one bar comprises first and second bars spaced apart in a first direction, said first direction preferably being parallel, or substantially parallel, in use, with a longitudinal axis of said row of plates, and/or wherein, preferably, the detection device is coupled to the base by at least one resiliently biased suspension device configured to hold the detection device in the extended state and to allow movement of the detection device towards the base against the resilient bias, and wherein said at least one bar is part of a respective suspension device, and wherein, preferably, at least one spring is provided around the bar for providing the resilient bias.

6. The apparatus of any preceding claim, wherein the detection device includes at least one engagement surface that is configured for engagement with at least one of said plates, preferably with at least two of said plates simultaneously, and wherein, preferably, said engagement surface comprises a first portion configured for simultaneously engaging with said first and second plates in the open state, preferably at least when said first and second plates are detected by said at least one sensor, and wherein, preferably, said first portion is flat, or substantially flat, and wherein, preferably, said first portion is a bottom surface of the detection device, and wherein, preferably, said engagement surface includes a ramp portion located at at least one end of the detection device, and preferably includes a respective ramp portion at each end of the detection device, said ramp portion preferably being flat or substantially flat, and wherein the ramp portion is preferably contiguous with said first portion of the engagement surface, and wherein, preferably, said ramp portion is configured such that the respective end of the detection device tapers in a direction away from said base.

7. The apparatus of any preceding claim, wherein said at least one sensor comprises a first sensor and a second sensor, said first and second sensors being configured to detect a respective one of said first and second plates when in the open state, and wherein, preferably, said first and second sensors are spaced apart in a first direction, said first direction preferably being parallel, or substantially parallel, in use, with a longitudinal axis of said row of plates, and wherein, preferably, said at least one sensor includes a third sensor located between said first and second sensors, said third sensor being configured to detect a gap between said first and second plates.

8. The apparatus of any preceding claim, wherein said engagement surface comprises a first portion configured for simultaneously engaging with said first and second plates in the open state, and wherein said at least one sensor is level, or substantially level, with the first portion of the engagement surface, or recessed with respect to the first portion of the engagement surface.

9. The apparatus of any preceding claim, wherein said engagement surface comprises a first portion configured for simultaneously engaging with said first and second plates in the open state, and wherein said at least one sensor is exposed by said first portion of the engagement surface.

10. The apparatus of any preceding claim, coupled to a washing apparatus of said filter press for movement with said washing apparatus in a first direction that is parallel or substantially parallel with a longitudinal axis of said row of plates, and wherein, preferably, the resilient bias applied to said detection device is configured to urge said detection device into engagement with a respective part of said first and second plates, and wherein, preferably, the plate detection apparatus is configured to detect a respective part of said first and second plates that projects laterally from said row.

11. The apparatus of claim 10, wherein said engagement surface comprises a first portion configured for simultaneously engaging with said first and second plates in the open state, the configuration being such that, when said first and second plates are detected by said detection device, said first portion of the engagement surface is in resiliently biased engagement with a respective part of the first and second plates simultaneously.

12. The apparatus of claim 10 or 11, wherein the plate detection apparatus is arranged to detect a respective part of said plates from above, and wherein the plate detection apparatus is configured such that, upon movement of the plate detection apparatus in said first direction towards the respective part of a plate, the detection device engages with the respective part and is pushed upwards against the resilient bias applied to the detection device, and wherein, preferably, said engagement surface includes a ramp portion located at at least one end of the detection device, and wherein upon movement of the plate detection apparatus in said first direction towards the respective part of a plate, the ramp portion at one end of the detection device engages with the respective part to cause the detection device to be pushed upwards against the resilient bias.

13. The apparatus of any one of claims 10 to 12, wherein the plate detection apparatus is arranged to detect, or at least engage with, a surface of a respective part of said first and second plates from above, and wherein the plate detection apparatus is configured such that, in the extended state, at least part of the detection device is below the respective surface.

14. The apparatus of any one of claims 10 to 13, including, or being in communication with, a controller, the controller being configured to control the operation of the washing apparatus depending on detection of correct alignment using the plate detection apparatus, and wherein, preferably, the controller is configured to determine from the detection apparatus when correct alignment with an instance of adjacent open plates is achieved, and to consequently cause the washing apparatus to deploy a washing device, and preferably also to, when washing is complete, cause the washing apparatus to move along the row of plates until correct alignment with another instance of adjacent open plates is detected.

15. A filter press comprising a row of plates wherein adjacent plates are movable with respect to each other between an open state and a closed state, the filter pressing including a plate detection apparatus as claimed in any preceding claim, said plate detection apparatus preferably being coupled to a washing apparatus of said filter press for movement with said washing apparatus in a first direction that is parallel or substantially parallel with a longitudinal axis of said row of plates, and wherein said washing apparatus is movable with respect to said row in said first direction and is alignable with successive instances of said first and second plates as it moves along the row, and wherein said washing apparatus is aligned with a respective instance of first and second plates by detection of said first and second plates in the open state by said plate detection apparatus, and wherein, typically, said washing apparatus includes a washing device that is deployable to wash said first and second plates when in the open state, and wherein, upon alignment of said washing apparatus with an instance of said first and second plates in the open state, said washing apparatus is operated to deploy the washing device, typically by inserting the washing device between the first and second plates.
